# EUROPEAN PATENT APPLICATION

(11) **EP 2 680 172 A2**
(43) Date of publication of application: **01.01.2014**
(21) Application number: 13305877.6
(22) Date of filing: 25.06.2013
(51) Int. Cl.: G06F 17/30

(54) **Other user content-based collaborative filtering**

(30) Priority: 29.06.2012 US 201261666523 P
(71) Applicant: Orange, 75015 Paris (FR)
(72) Inventor: Gay, Julian, San Francisco, CA 94110 (US); Lee, Dominic, San Francisco, CA 94086 (US); Nuzhnyi, Pylyp, San Francisco, CA 94103 (US)

(57) **Abstract**

A method is provided for recommending content in a distributed database environment, the distributed database environment comprising a first user, a second user, a first container of searchable data accessible by the first user and a second container of searchable data accessible by the second user, the method comprising: receiving by a search routine, a selection of a first search result produced in response to a first search on a first search term by the first user in the first container; associating the selection and attributes of the selection within the first container with the first search term; performing a search, by the search routine, on a second search term that is the same or similar to the first search term according to a predefined criteria, of the second user in the second container; producing a second search result that is influenced by the associated selection and attributes.

## Description

### BACKGROUND

Individuals and businesses are increasingly reliant on Software as a Service (SaaS)/Cloud-based services for critical aspects of their operational infrastructure. As information migrates into a Cloud-based architecture, the ability to perform effective searches (i.e., those that return the most relevant results based on a query without an excess of non-relevant results) becomes more important.

Collective filtering is known today to improve a search hit list based on what other users, either from a user's own social group or outside of the social group, have consumed (e.g., selected for further follow-up, purchased, saved, etc.) when formulating similar search queries. By way of example, Google's "+1" allows users to click on a "+1" button when viewing content in order to indicate the user's public "stamp of approval" of the content. This could apply to musical content, recipes, or any other content that the user finds interesting. Google+ then lets the user share this information, add a comment, and send it to appropriate friend/contact circles. Thus, search results are influenced by selections from items in the same repository (Google+) and also may be similar types, such as news stories.

Thus, in existing solutions, the documents or data from previous search results that have been found interesting or consumed by earlier users will influence current search results' hit lists that are presented to the current user. In other words, the collective filtering uses whatever results previous users have consumed, and advances them in the hit list the moment a new user places a similar search request.

However, in a corporate or organizational entity that stores data in the cloud, it is possible that past and present searches may be performed in separate data containers by different users who do not have access to each others' documents, i.e., the databases for each search request are distinct, the users to not have direct access to each others' documents, and therefore, the known collective filtering cannot be strictly applied.

### SUMMARY

In order to address the above issues, a method is provided for recommending content in a distributed database environment, the distributed database environment comprising a first user, a second user, a first container of searchable data accessible by the first user but not by the second user, and a second container of searchable data accessible by the second user but not by the first user, the method comprising: receiving by a search routine, a selection of a first search result produced in response to a first search on a first search term by the first user in the first container; associating the selection and attributes of the selection within the first container with the first search term; performing a search, by the search routine, on a second search term that is the same or similar to the first search term according to a predefined criteria, of the second user in the second container; producing a second search result that is influenced by the associated selection and attributes.

A further method is provided for recommending content in a distributed database environment, the distributed database environment comprising a first user, a second user, a first container of searchable data accessible by the first user but not by the second user, and a second container of searchable data accessible by the second user but not by the first user, the method comprising: receiving by a search routine, a first search result produced in response to a first search on a first search term by the first user in the first container; associating attributes of data related to the first search result within the first container with the first search term; performing a search, by the search routine, on a second search term that is the same or similar to the first search term according to a predefined criteria, of the second user in the second container; producing a second search result that is influenced by the associated attributes.

An appertaining computer system with a processor, memory, and associated algorithms may be utilized to perform the above methods, and a non-transitory computer media with program instructions may be provided for performing the above methods.

Thus, user interactions on a second dataset can influence the quality of search results from a mutually excusive dataset.

### DESCRIPTION OF THE DRAWINGS

Figure 1 is a block diagram illustrating a search engine that influences a second user's search results based on activities of a first user, where there is some overlapping content; and
Figure 2 is a block diagram illustrating a search engine that influences a second user's search results based on activities of a first user, where there is no overlapping content.

### DETAILED DESCRIPTION

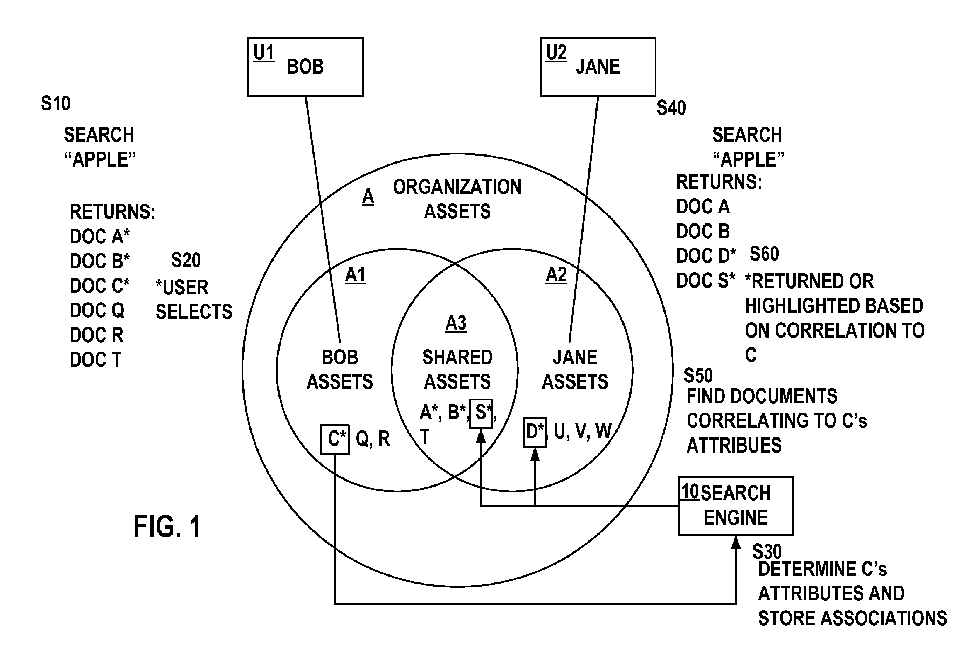

Figure 1 illustrates a basic scheme according to an embodiment of the invention involving two users in an organization: Bob U1 and Jane U2. The organization maintains its organizational assets A, including user data, in a cloud (or a distributed database) environment.

As illustrated in Figure 1, Bob U1 has access to his assets A1, Jane U2 has access to her assets A2, and they both have access to certain shared assets A3 (Jane U2 does not have access to Bob's assets A1 that are not a part of the shared assets A3, and vice versa). However, the search engine 10, can access both Bob's assets A1 and Jane's assets A2, along with their shared assets A3. Such a search engine 10 may have access to all of the organization assets A, or some predetermined amount of assets (that could be based on a class of users, a departmental/functional grouping, or some other type of grouping).

Embodiments of the invention relate to the fact that the individual users U1 (U2) do not have access to some of each others' assets A2, (A1), but that the search engine does, in fact have access to all assets A1 and A2, and uses the first user's U1 selections based on search returns within his own assets A1 to influence search returns in the second user's U2 search results. Thus, the search engine must have an ability to access some information not accessible by each of the users.

Figure 1 presents, by way of example, how this is performed. In a first step S10, the first user, Bob, U1 performs a search via the search engine 10 for the word "apple". The search engine returns five result documents A, B, C, Q, R. Two of these documents A, B are a part of the shared assets A3. Of these five, Bob U1 selects or highlights three A, B, C in step S20.

The search engine 10, in step S30, determines attributes of the selected documents and stores the attributes, associations, and correlations. Although Figure 1 only shows the search engine 10 determining C's attributes, the invention is not limited thereto, and the attributes of A and B, as part of the shared assets A3, could be determined as well. These attributes could be based on document content, such as frequency of word or pattern usage, inclusion of certain type of image data, links, etc. These attributes could also be based on document metadata, such as creation date, file size, etc. The various document attributes are associated and correlated with both Bob's U1 search term and Bob's selection of documents A, B, and C as relevant. This association/correlation can be stored in a memory accessible by the search engine for later us when someone else performs a similar search. Whether a later search constitutes a same or similar search can be determined based on some form of predefined criteria, such as a required matching of terms, synonyms, etc., and can be assigned based on a probability criteria.

At some later unspecified time, in a further step S40, a second user, Jane, U2, also performs a search on the word "apple". The search engine 10 responds to Jane's U2 request by searching through relevant documents, both her own A2 and shared A3 documents.

The search engine 10, in step S50, determines which of the documents in A2 and A3 (but not A1) most closely correlate with the attributes, associations, and correlations determined with regard to Bob's U1 selected document C (and possibly selected A and B in the shared assets A3 as well) and returns or highlights these documents, in step S60, based on Bob's U1 selection and the determining step S30 by the search engine. Note that the action taken by the search engine 10 related to the newly emphasized document D (newly emphasized based on Bob's selection of C) can be one of inclusion on a return results list, moving higher on the results or a ranking list, or highlighting in some other manner.

Correspondingly, it is also possible that the search engine makes a similar determination with regard to the non-selected documents. For example, Bob's U1 search for apple returned the shared document T. However, since Bob U1 did not select this document, his non-selection lowered the relevance of that document T with regard to the search "apple" so that it was not returned in a subsequent search on "apple" by Jane U2. Additionally, the attributes of non-selected document T could be associated with document U so that it is not returned in Jane's U2 search for "apple", even though document U would have been returned were it not for Bob's non-selection of document T.

Of significance is the fact that Bob's U1 selection of document C, which is inaccessible to Jane U2, but is accessible by the search engine 10, influences the presentation of Jane's U2 document D in her own assets A2 in the search results. Also of significance is the fact that although Bob's U1 original search on "apple" did not return document S from the shared assets A3, the search engine was able to determine that document S is relevant for the search term "apple" based on its correlation with document C (alone, or possible based on Bob's U1 selection of A and B together).

In this way, a first user's selection of relevance can influence a search of a second user, even though the first user's selection is a selection of relevant documents inaccessible to the second user.

In a further embodiment, the associations in step S30 are made based on contents of the returned documents from the first search in S10. In other words, it is not necessary that the user selects the documents in step S20, and that all returned documents from the search A, B, C, Q, R, T are parsed and analyzed to determine relative associations with the search term.

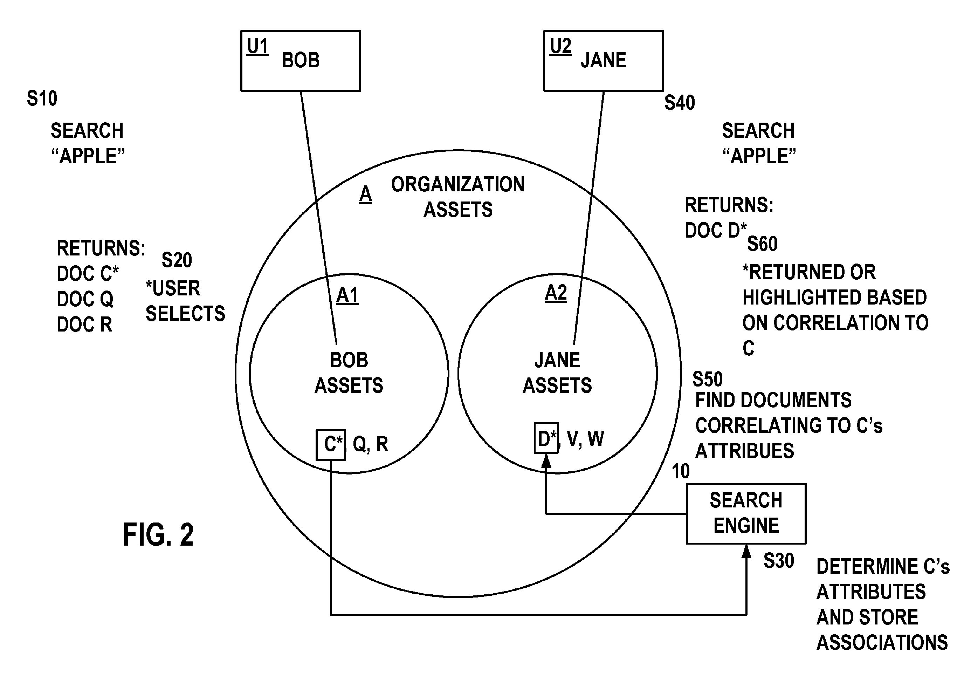

Figure 2 is similar to Figure 1, and illustrates the same principles-the difference being that there is no overlap, i.e., no shared assets A3 as can be found in Figure 1. In Figure 2, Bob's U1 assets A1 are completely separate from Jane's U2 assets A2. The operation is no different from what was described with respect to Figure 1. Bob's U1 selection of document C in step S20 based on results returned from the search "apple" in step S10 is used by the search engine 10 to highlight/emphasize document D in response to Jane's U2 search in step S40 based on a correlation between documents C and D and the fact that Bob U1 selected document C as one of relevance. Since there are no overlaps in Bob and Jane's content, there is no shared content that can be recommended to either of them. However, by semantically analyzing the content retrieved in the search, the system can relate what Bob found useful to influence what Jane (working in a similar context such as the same company) may find useful, improving the search experience.

Greater refinement could occur if the system has knowledge about Bob and Jane's roles in the company. For example, if they are both in the Accounting Department or other factors such as physical proximity (of office locations), then this could influence the search. For example, Bob searches his personal files for "Apple" and chooses a file which contains information about a contract the company has with Apple (the document need not have Apple in the title or body of the document). When Jane does a similar search minutes later, the system uses its knowledge of what was the most relevant document from Bob's search to enhance the prominence of a similar (but different) document in Jane's repository. This highlights an anonymous, collaborative filtering or influencing based on non-shared, heterogeneous content.

The system or systems described herein may be implemented on any form of computer or computers and the components may be implemented as dedicated applications or in client-server architectures, including a web-based architecture, and can include functional programs, codes, and code segments. Any of the computers may comprise a processor, a memory for storing program data and executing it, a permanent storage such as a disk drive, a communications port for handling communications with external devices, and user interface devices, including a display, keyboard, mouse, etc. When software modules are involved, these software modules may be stored as program instructions or computer readable codes executable on the processor on a non-volatile computer-readable media such as read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion. This media is readable by the computer, stored in the memory, and executed by the processor.

All references, including publications, patent applications, and patents, cited herein are hereby incorporated by reference to the same extent as if each reference were individually and specifically indicated as incorporated by reference and were set forth in its entirety herein.

For the purposes of promoting an understanding of the principles of the invention, reference has been made to the preferred embodiments illustrated in the drawings, and specific language has been used to describe these embodiments. However, no limitation of the scope of the invention is intended by this specific language, and the invention should be construed to encompass all embodiments that would normally occur to one of ordinary skill in the art.

Embodiments of the invention may be described in terms of functional block components and various processing steps. Such functional blocks may be realized by any number of hardware and/or software components that perform the specified functions. For example, the embodiments may employ various integrated circuit components, e.g., memory elements, processing elements, logic elements, look-up tables, and the like, which may carry out a variety of functions under the control of one or more microprocessors or other control devices. Similarly, where the elements are implemented using software programming or software elements, embodiments of the invention may be implemented with any programming or scripting language such as C, C++, Java, assembler, or the like, with the various algorithms being implemented with any combination of data structures, objects, processes, routines or other programming elements. Functional aspects may be implemented in algorithms that execute on one or more processors. Furthermore, embodiments of the present invention could employ any number of conventional techniques for electronics configuration, signal processing and/or control, data processing and the like. The words "mechanism" and "element" are used broadly and are not limited to mechanical or physical embodiments, but can include software routines in conjunction with processors, etc.

The particular implementations shown and described herein are illustrative examples of the invention and are not intended to otherwise limit the scope of the invention in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. Moreover, no item or component is essential to the practice of the invention unless the element is specifically described as "essential" or "critical".

The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.
The use of the terms "a" and "an" and "the" and similar referents in the context of describing the invention (especially in the context of the following claims) should be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein are performable in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed.

## Claims

1. A method for recommending content in a distributed database environment, the distributed database environment comprising a first user, a second user, a first container of searchable data accessible by the first user but not by the second user, and a second container of searchable data accessible by the second user but not by the first user, the method comprising:
receiving by a search routine, a selection of a first search result produced in
response to a first search on a first search term by the first user in the first container;
associating the selection and attributes of the selection within the first
container with the first search term;
performing a search, by the search routine, on a second search term that is
the same or similar to the first search term according to a predefined criteria, of the second user in the second container;
producing a second search result that is influenced by the associated
selection and attributes.

2. The method according to claim 1, wherein the receiving of the first search result includes results produced in response to the first search on the first term by the first user in a third shared container that is accessible by both the first user and the second user.

3. The method according to claim 1, wherein an organizational entity is a group having access across the entire distributed database environment.

4. The method according to claim 1, wherein the attributes are data or document content attributes.

5. The method according to claim 4, wherein the data or document content attributes are selected from the group consisting of a frequency of a word or a pattern, image data, or links.

6. The method according to claim 1, wherein the attributes are data or document metadata.

7. The method according to claim 6, wherein the data or document metadata is selected from the group consisting of creation date and file size.

8. The method according to claim 1, wherein the predefined criteria is a degree of term matching or synonyms.

9. The method according to claim 1, wherein the predefined criteria is a probability threshold.

10. The method according to claim 1, wherein the producing is further influenced by a predefined and known relationship between the first user and the second user.

11. A method for recommending content in a distributed database environment, the distributed database environment comprising a first user, a second user, a first container of searchable data accessible by the first user but not by the second user, and a second container of searchable data accessible by the second user but not by the first user, the method comprising:
receiving by a search routine, a first search result produced in response to a
first search on a first search term by the first user in the first container;
associating attributes of data related to the first search result within the first
container with the first search term;
performing a search, by the search routine, on a second search term that is
the same or similar to the first search term according to a predefined criteria, of the second user in the second container;
producing a second search result that is influenced by the associated
attributes.

12. A system for recommending content in a distributed database environment, the distributed database environment comprising a first user, a second user, a first container of searchable data accessible by the first user but not by the second user, and a second container of searchable data accessible by the second user but not by the first user, comprising:
a first search result algorithm that receives a selection of a first search result
produced in response to a first search on a first search term by the first user in the first container;
an associating algorithm that associates the selection and attributes of the
selection within the first container with the first search term;
a search algorithm that performs a search on a second search term that is the
same or similar to the first search term according to a predefined criteria, of the second user in the second container;
a second search result algorithm that produces a second search result that is
influenced by the associated selection and attributes.

13. A non-transitory computer program product, comprising a computer usable medium having a computer readable program code embodied therein, said computer readable program code adapted to be executed to implement the method according to claim 1.
